# FASCICULE DE BREVET EUROPEEN

(11) **EP 2 395 625 B1**
(45) Date de publication et mention de la délivrance du brevet: **10.08.2016**
(21) Numéro de dépôt: 11165654.2
(22) Date de dépôt: 11.05.2011
(51) Int. Cl.: H02J 7/14, H04Q 9/00, H02N 1/04, G08C 17/00, H02J 7/32

(54) **Dispositif de commande à distance incluant un dispositif d'accumulation d'énergie**
Fernsteuerungsvorrichtung, die eine Energieakkumulationsvorrichtung einschließt
Remote control device including a power accumulating device

(30) Priorité: 08.06.2010 FR 1054474
(43) Date de publication de la demande: 14.12.2011
(73) Titulaire: Schneider Electric Industries SAS, 92500 Rueil-Malmaison (FR)
(72) Inventeur: Vigouroux, Didier, 38190 Brignoud (FR); Cartier Millon, Christophe, 38320 Bresson (FR); Sannet, Daniel, 38760 Varces Allières et Risset (FR)
(74) Mandataire: Dufresne, Thierry

(56) Documents cités:
- EP-A1- 2 180 575
- CN-A- 101 425 763
- US-B2- 6 940 258

## Description

La présente invention se rapporte à un dispositif de commande à distance comportant notamment un générateur d'énergie permettant de convertir une énergie mécanique en énergie électrique et un dispositif d'accumulation d'énergie permettant de récupérer l'énergie produite par le générateur.

Il est connu dans l'art antérieur des dispositifs de commande à distance employant un générateur d'énergie pour convertir une énergie mécanique en énergie électrique. Il s'agit par exemple d'interrupteurs sans fil dans lesquels une pression sur le bouton entraîne l'actionnement du générateur et la génération d'un courant électrique. Le courant électrique généré est employé par un émetteur pour envoyer un message à un récepteur distant associé à un dispositif à commander tel que par exemple une lampe. Le générateur peut par exemple être du type à induction électromagnétique ou de type piézoélectrique. Ces dispositifs utilisent en règle générale un condensateur pour récupérer l'énergie électrique produite grâce au générateur. Le document US 6,940,258 décrit pour sa part un dispositif d'accumulation d'énergie adapté pour récupérer l'électricité générée par une dynamo de bicyclette. Ce dispositif comporte notamment deux condensateurs. L'un des condensateurs se charge lors de l'alternance négative de la tension générée par la dynamo et se décharge dans l'autre condensateur lors de l'alternance positive de la tension générée par la dynamo. On identifie également le document CN 101 425 763 A qui décrit un dispositif de commande à distance sans batterie dont l'enérgie de fonctionnement est pourvue par un mécanisme piézoélectrique.

Le but de l'invention est de proposer un nouveau dispositif de commande à distance dans lequel le dispositif d'accumulation d'énergie est optimisé pour récupérer le maximum d'énergie généré grâce au générateur.

Ce but est atteint par un dispositif de commande à distance comportant :
- un générateur d'énergie destiné à convertir une énergie mécanique en énergie électrique,
- un dispositif d'accumulation de l'énergie électrique connecté au générateur d'énergie pour récupérer l'énergie électrique générée par le générateur et alimenter un émetteur sans-fil pour envoyer un message à un récepteur distant, le dispositif d'accumulation de l'énergie électrique comportant :

- un premier condensateur connecté aux bornes du générateur d'énergie et un premier interrupteur destiné à commander la charge/décharge du premier condensateur,
- un deuxième condensateur connecté au premier condensateur et un deuxième interrupteur destiné à commander la charge/décharge du deuxième condensateur,
le dispositif de commande à distance étant caractérisé en ce qu'il comporte des moyens de commande séquentielle agencés pour commander successivement le premier interrupteur et le deuxième interrupteur, les moyens de commande séquentielle comportent un organe de commande mobile entre deux positions et coopérant successivement avec le premier interrupteur et le deuxième interrupteur lors d'un mouvement entre ses deux positions.

Selon une autre particularité, le dispositif comporte un boîtier comportant une base renfermant le générateur d'énergie et le dispositif d'accumulation d'énergie, l'organe de commande étant agencé pour coulisser sur la base du boîtier entre ses deux positions.

Selon un premier mode de réalisation de l'invention, le dispositif comporte des moyens mécaniques d'entraînement agencés entre l'organe de commande et le générateur d'énergie pour commander un cycle de génération d'énergie électrique au générateur d'énergie lors du mouvement de l'organe de commande entre ses deux positions, ledit cycle de génération d'énergie électrique comportant une alternance de tension positive ou négative destinée à charger le premier condensateur.

Selon un second mode de réalisation de l'invention, le dispositif comporte des moyens mécaniques d'entraînement agencés entre l'organe de commande et le générateur d'énergie pour commander, lors du mouvement de l'organe de commande entre ses deux positions, un premier cycle de génération d'énergie électrique au générateur d'énergie comportant une alternance de tension positive ou négative destinée à charger le premier condensateur et au moins un deuxième cycle de génération d'énergie suivant le premier cycle de génération d'énergie électrique, ledit deuxième cycle de génération d'énergie comportant une alternance de tension respectivement négative ou positive destinée à charger un autre condensateur distinct du premier condensateur.

Selon une autre particularité, les moyens mécaniques d'entraînement agencés entre l'organe de commande et le générateur d'énergie comportent un mécanisme comportant une came et un suiveur de came. Selon l'invention, la came comporte au moins une rampe montante et une rampe descendante, chaque rampe commandant un cycle de génération d'énergie.

Selon une autre particularité, le générateur d'énergie comporte une partie mobile actionnable entre un premier état et un deuxième état pour générer une énergie électrique lors d'un cycle de génération d'énergie.

Selon une autre particularité, le générateur d'énergie est de type à induction électromagnétique et la partie mobile est actionnable en mouvement par rapport à une bobine d'excitation.

Selon une autre particularité, le premier interrupteur et le deuxième interrupteur sont montés en série avec une borne de sortie du générateur d'énergie.

Selon une autre particularité, le dispositif comporte une interface d'actionnement connectée en série avec le premier interrupteur et le deuxième interrupteur et destinée à commander l'émetteur sans-fil.

Selon l'invention, l'interface d'actionnement est montée sur le boîtier et peut être masquée par l'organe de commande dans une première position ou démasquée lorsque l'organe de commande est dans une deuxième position.

Selon l'invention, l'interface d'actionnement comporte un ou plusieurs boutons.

D'autres caractéristiques et avantages vont apparaître dans la description détaillée qui suit en se référant à un mode de réalisation donné à titre d'exemple et représenté par les dessins annexés sur lesquels :
- la figure 1A montre schématiquement un premier mode de réalisation du dispositif de commande à distance de l'invention,
- la figure 1B montre schématiquement l'émetteur sans-fil représenté sur la figure 1A,
- la figure 2 montre plusieurs courbes illustrant le principe de fonctionnement du dispositif de commande schématisé en figure 1A,
- la figure 3 montre schématiquement un deuxième mode de réalisation du dispositif de commande de l'invention,
- la figure 4 montre plusieurs courbes illustrant le principe de fonctionnement du dispositif de commande schématisé en figure 3,
- la figure 5 représente une alternative électronique utilisable dans le dispositif de commande de l'invention,
- la figure 6 représente en vue de côté et en position d'ouverture le dispositif de commande de l'invention,
- la figure 7 représente en vue de côté et en position ouverte le dispositif de commande de l'invention ainsi qu'un récepteur associé à une lampe à commander,
- les figures 8A à 8C illustrent le principe d'actionnement des deux interrupteurs lors du mouvement du capot de sa position de fermeture à sa position d'ouverture,
- la figure 9 montre un exemple de réalisation du dispositif de commande de l'invention avec le capot en position d'ouverture,
- les figures 10A et 10B montrent respectivement une came en forme de rampe montante et une came comportant une rampe montante suivie d'une rampe descendante,
- la figure 11 représente en perspective un générateur d'énergie à induction électromagnétique pouvant être employé dans le dispositif de l'invention,
- la figure 12 représente en vue éclatée le générateur d'énergie de la figure 11,
- les figures 13A et 13B illustrent le fonctionnement du générateur d'énergie représenté en figure 11.

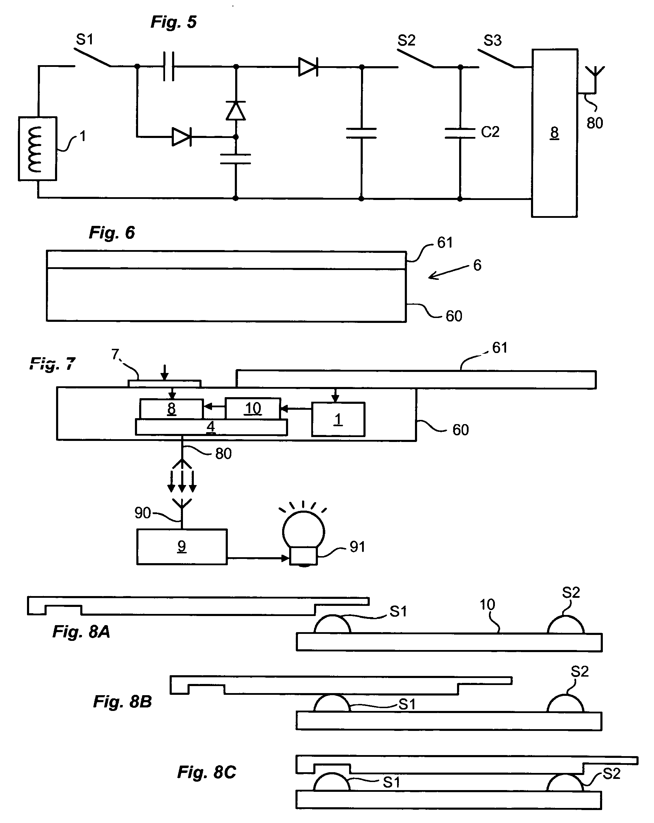

L'invention consiste en un dispositif de commande à distance qui comporte notamment un générateur 1 permettant de convertir une énergie mécanique en énergie électrique. L'invention porte plus précisément sur le stockage de l'énergie électrique générée grâce au générateur 1 d'énergie. L'énergie électrique générée sert à alimenter un émetteur 8 sans-fil permettant d'envoyer un message à un récepteur 9 distant associé à un dispositif à commander. Le dispositif prend par exemple la forme d'une télécommande. Le dispositif à commander est par exemple une lampe 91 (figure 7).

De manière connue, le dispositif de commande à distance comporte un générateur 1 d'énergie lui permettant d'être autoalimenté et donc de ne pas recourir à une pile électrique. Ce générateur d'énergie 1 est par exemple de type à induction électromagnétique ou de type piézoélectrique et permet de transformer une énergie mécanique en énergie électrique. L'énergie mécanique utilisée pour actionner le générateur 1 est fournie par le mouvement d'un organe de commande mécanique mobile.

En référence aux figures 6 et 7 annexées, le dispositif de commande à distance de l'invention comporte un boîtier 6, par exemple en matière plastique, formé d'une base 60 et dudit organe de commande mobile qui prend la forme d'un capot 61 mobile apte à se déplacer sur la base 60 entre une position de fermeture (figure 6) et une position d'ouverture (figure 7). Le capot 61 peut réaliser par exemple un mouvement de coulissement, un mouvement de rotation ou tout autre type de mouvement par rapport à la base 60 entre ses deux positions. Dans la position de fermeture du capot 61, le dispositif de commande a par exemple une forme générale parallélépipédique. Dans la suite de la description, on considérera que le capot 61 réalise un mouvement de coulissement sur la base 60.

Le dispositif comporte en outre une interface d'actionnement montée sur la surface de la base 60 du boîtier 6 située en vis-à-vis du capot 61. Cette interface d'actionnement permet d'activer l'émetteur 8 sans fil pour l'envoi d'un message vers le récepteur 9. Selon l'invention, le capot 61 coulissant est destiné à masquer ou démasquer cette interface d'actionnement selon qu'il est respectivement en position de fermeture ou en position d'ouverture. L'interface d'actionnement comporte par exemple un capteur de position mécanique. L'interface d'actionnement peut par exemple se présenter sous la forme d'un ou plusieurs boutons 7 (figure 7). Chaque bouton 7 sera par exemple une touche de type électronique telle que celle que l'on trouve sur un téléphone mobile.

Le boîtier du dispositif de commande de l'invention loge également une carte électronique 4 comportant l'émetteur 8 par exemple de type radiofréquence alimenté par le courant produit par le générateur 1 pour envoyer des signaux radio vers le récepteur 9 distant et notamment un dispositif d'accumulation 10 de l'énergie électrique générée par le générateur 1. Le dispositif de commande comporte une antenne 80 pouvant être intégrée au boîtier 6 et permettant d'envoyer le message vers le récepteur 9 qui comporte une antenne 90 correspondante lui permettant de recevoir le message. Le protocole de communication sans fil utilisé entre l'émetteur 8 et le récepteur 9 sera par exemple ZIGBEE. En variante de réalisation, l'émetteur peut être de type infrarouge. Selon l'invention, l'émetteur 8 peut ainsi être alimenté en courant par le générateur d'énergie 1 via le dispositif d'accumulation 10 d'énergie électrique et est apte à être actionné grâce à l'interface d'actionnement pour valider l'envoi d'un message. Le message pourra comporter plusieurs trames successives identiques.

Le générateur 1 d'énergie est logé à l'intérieur de la base 60 du boîtier et destiné à convertir l'énergie mécanique fournie par le mouvement du capot coulissant en énergie électrique lorsque le capot 61 coulisse sur la base 60 de sa position de fermeture vers sa position d'ouverture ou de sa position d'ouverture vers sa position de fermeture.

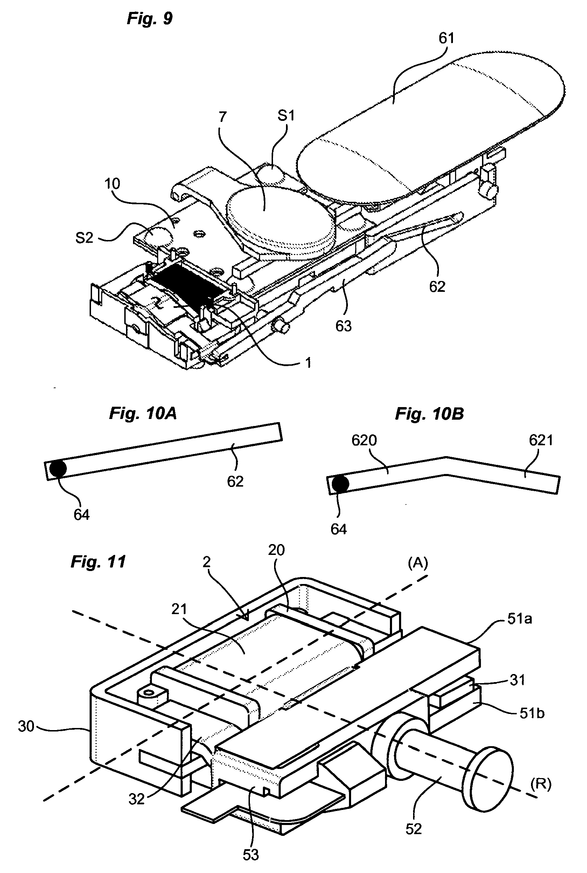

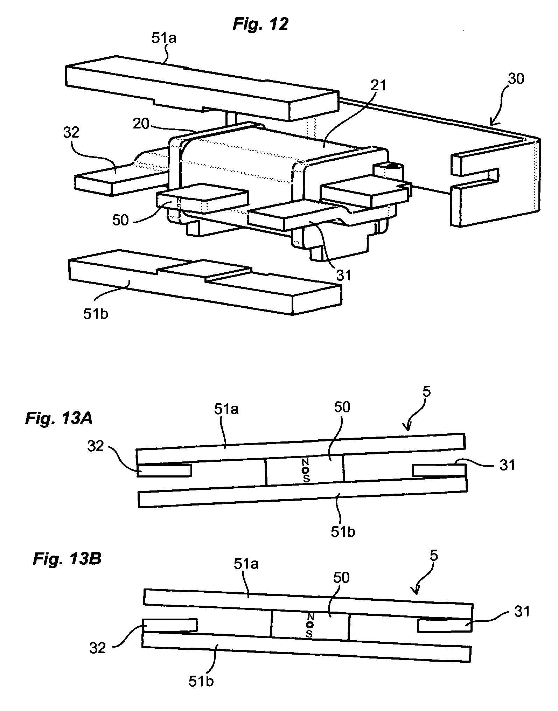

Un générateur 1 d'énergie à induction électromagnétique est représenté en figures 11 et 12. Il permet de générer un courant électrique dans une bobine d'excitation 2 en faisant varier le flux magnétique traversant la bobine 2 par une action mécanique externe.

En référence aux figures 11 à 13B, le générateur 1 comporte notamment un circuit magnétique formé d'une partie fixe et d'une partie mobile 5, à travers lesquelles peut circuler un champ magnétique, et une bobine d'excitation 2.

Le flux magnétique dans le circuit magnétique est défini par la position angulaire instantanée de la partie mobile 5 par rapport à la partie fixe de sorte que le mouvement de la partie mobile 5 par rapport à la partie fixe crée une variation du flux magnétique à travers la bobine 2 ce qui entraîne la création d'un courant électrique dans la bobine 2. La tension créée aux bornes de la bobine 2 par la variation du flux magnétique dépend du temps et donc de la vitesse de déplacement de la partie mobile 5 par rapport à la partie fixe.

La bobine d'excitation 2 comporte une armature 20 réalisée dans un matériau amagnétique, sur laquelle est enroulé un bobinage 21 de n spires d'un fil conducteur (figures 11 et 12). L'armature 20 présente une ouverture centrale formée suivant un axe longitudinal (A) et dont les dimensions sont adaptées pour pouvoir être traversée plusieurs fois par le circuit magnétique. Sur les figures 11 et 12, la partie fixe du circuit magnétique traverse deux fois l'ouverture centrale de la bobine 2 en formant une boucle. Le circuit magnétique traverse donc une première fois l'ouverture centrale de la bobine 2, puis contourne la bobine 2 pour former la boucle, et traverse une seconde fois l'ouverture centrale de la bobine 2.

La partie mobile 5 du circuit magnétique présente par exemple une forme symétrique en H comportant par exemple un aimant permanent 50 pris entre deux couches 51 a, 51 b parallèles en matériau ferromagnétique, une couche supérieure 51 a et une couche inférieure 51 b. Cette partie mobile 5 est montée rotative sur un axe de rotation (R) horizontal perpendiculaire à l'axe longitudinal (A) de l'ouverture centrale de l'armature 20. L'axe de rotation (R) est matérialisé sur la figure 10 par une pièce cylindrique 52 (non représentée sur la figure 11) solidaire d'une pièce support 53 montée sur la partie mobile 5 et solidaire en rotation de la partie mobile 5.

La partie fixe du circuit magnétique est réalisée dans un matériau de forte perméabilité magnétique tel qu'un matériau ferromagnétique. En référence aux figures 11 et 12, la partie fixe comporte une embase 30 en forme de U enjambant la bobine d'excitation 2. La partie fixe du circuit magnétique comporte également un premier bras 31 et un second bras 32 distincts, non jointifs et non identiques, l'un des bras étant le reflet de l'autre dans un miroir. Le premier bras 31 est relié à la première extrémité de l'embase 30 tandis que le second bras 32 est relié à la seconde extrémité de l'embase 30. Ces deux bras 31, 32 sont en forme de L et traversent distinctement l'ouverture centrale de l'armature 20 suivant deux plans parallèles à l'axe longitudinal (A) de l'ouverture centrale de la bobine 2. Les deuxièmes extrémités de chacun des bras 31, 32 sont positionnées de part et d'autre de l'aimant permanent 50 de la partie mobile 5 et entre les deux couches ferromagnétiques 51 a, 51 b de la partie mobile 5. Chaque bras 31, 32 forme une butée pour la partie mobile 5 et définit deux plages d'appui opposées, une plage d'appui supérieure et une plage d'appui inférieure. La partie mobile 5 présente un degré de liberté en rotation entre les butées formées par chacun des bras 31, 32.

Comme l'embase 30 est agencée pour être positionnée de part et d'autre de la bobine 2, le champ magnétique circulant dans les bras 31, 32 traverse toujours l'ouverture centrale de la bobine 2 dans le même sens. En conséquence, le champ magnétique traverse l'ouverture centrale de la bobine d'excitation 2 deux fois dans le même sens.

En référence aux figures 13A et 13B, on peut voir que la partie mobile 5 effectue un mouvement de balancier autour de son axe (R) et peut prendre deux positions extrêmes distinctes définies par les butées, dans chacune desquelles la partie mobile 5 est retenue par des forces magnétiques. Lorsque la partie mobile 5 est décollée de l'une de ses positions extrêmes, au-delà d'une position d'équilibre centrale, elle est instantanément attirée par effet magnétique vers l'autre position extrême. Ce phénomène est notamment décrit dans la demande de brevet antérieure GB 1 312 927.

Selon l'invention, le générateur 1 d'énergie est logé dans la base 60 du boîtier et est couplé mécaniquement au capot 61 par l'intermédiaire de moyens mécaniques d'entraînement permettant de convertir le mouvement du capot 61 entre ses deux positions en un mouvement de la partie mobile 5 du générateur 1. En référence à la figure 9 et aux figures 10A et 10B, ces moyens mécaniques d'entraînement peuvent par exemple comporter un mécanisme de came et de suiveur de came agencé entre le capot 61 et la partie mobile 5 du générateur 1. La came comporte par exemple une ou plusieurs rampes 62, 620, 621 réalisées sur une pièce solidaire du capot 61 et coopérant avec un pion 64 agencé à une première extrémité d'un levier 63 et formant le suiveur de came. La deuxième extrémité du levier 63 coopère avec la partie mobile 5 du générateur 1 d'énergie logé dans le boîtier. Dans son mouvement de coulissement, par l'intermédiaire de la came et du suiveur de came, le capot 61 entraîne le levier 63 dans un mouvement de pivotement, celui-ci entraînant alors la partie mobile 5 du générateur 1 en rotation autour de son axe.

Le dispositif d'accumulation 10 de l'énergie électrique employé dans l'invention comporte notamment un premier condensateur C1 et un premier interrupteur S1 qui permet de commander la charge ou la décharge du premier condensateur C1 ainsi qu'un deuxième condensateur C2 et un deuxième interrupteur S2 destiné à commander la charge ou la décharge du deuxième condensateur C2. Cette configuration particulière permet notamment d'optimiser le stockage de l'énergie électrique générée par le générateur 1 et permet notamment d'éviter la saturation rapide des moyens de stockage et d'augmenter la durée de sauvegarde de l'énergie générée. Les deux interrupteurs S1, S2 sont par exemple de type mécanique.

Les deux interrupteurs sont par exemple montés sur la carte électronique 4 logée dans le boîtier 6 du dispositif, sous le capot coulissant 61 de manière à pouvoir être en interaction mécanique avec le capot 61 lors de son coulissement.

Selon l'invention, les deux interrupteurs S1, S2 sont commandés selon une séquence particulière définie par leur position respective par rapport au capot 61 dans son mouvement de coulissement. Pour optimiser le stockage de l'énergie, l'invention consiste à réaliser une séquence dans laquelle :
- le premier interrupteur S1 est d'abord fermé pour charger le premier condensateur C1 avec l'énergie générée par le générateur 1, puis
- le deuxième interrupteur S2 est fermé pour rééquilibrer les charges entre le premier condensateur C1 et le deuxième condensateur C2, tout en ouvrant le premier interrupteur S1 pour empêcher la décharge du premier condensateur C1 dans la résistance de la bobine 2 du générateur 1 d'énergie.

Cette séquence est illustrée par les figures 8A à 8C montrant le coulissement du capot 61 ou d'une pièce solidaire au capot de sa position de fermeture à sa position d'ouverture par rapport aux interrupteurs S1, S2 présents sur la carte électronique 4. En effet, sur la figure 8A, le capot 61 est initialement dans sa position de fermeture, le premier interrupteur S1 est ouvert et le deuxième interrupteur S2 est également ouvert. Sur la figure 8B, le capot coulisse vers sa position d'ouverture entraînant l'activation du premier interrupteur S1. Le deuxième interrupteur S2 reste fermé. Sur la figure 8C, le capot arrive en bout de course, c'est-à-dire en position d'ouverture et le deuxième interrupteur S2 se ferme pendant que dans le même temps le premier interrupteur S1 s'ouvre. Pour obtenir la séquence illustrée sur les figures 8A à 8C, il faut imaginer un agencement différent de celui montré sur la figure 9 où la position du capot 61 par rapport à la carte électronique 4 est inversée par rapport à celle montrée sur les figures 8A à 8C.

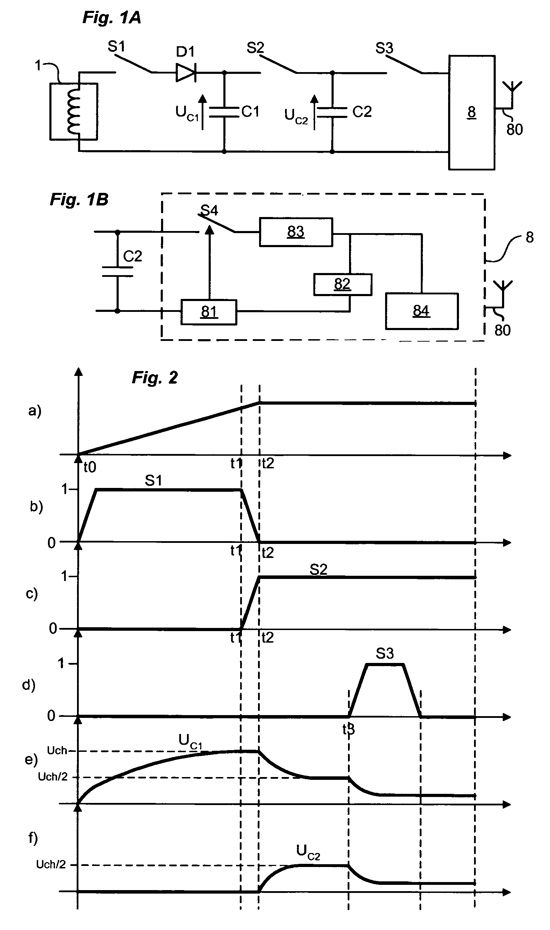

En référence à la figure 1A, selon un premier mode de réalisation du dispositif d'accumulation d'énergie, le premier interrupteur S1 et le deuxième interrupteur S2 sont connectés en série sur une borne de sortie du générateur 1 d'énergie. Une diode D1 est connectée en série entre le premier interrupteur S1 et le deuxième interrupteur S2. Le premier condensateur C1 est connecté d'une part à la sortie de la diode D1 et en amont du deuxième interrupteur S2 et d'autre part à une deuxième borne de sortie du générateur 1. Le deuxième condensateur C2 est connecté en parallèle du premier condensateur C1, entre le point de connexion situé en aval du deuxième interrupteur S2 et la deuxième borne de sortie du générateur 1. L'interface d'actionnement schématisée sous la forme d'un troisième interrupteur S3 est connectée en série avec les deux interrupteurs S1, S2, en aval du deuxième interrupteur S2 et du point de connexion du deuxième condensateur C2. Ce troisième interrupteur S3 est relié à une première borne de l'émetteur 8 sans-fil, une deuxième borne de l'émetteur 8 sans-fil étant reliée à la deuxième borne de sortie du générateur 1.

Le premier condensateur C1 est choisi avec une valeur de capacité la plus petite possible afin de pouvoir générer une tension maximale qui soit adaptée à la tenue en tension des composants électroniques du dispositif. Le deuxième condensateur C2 est par exemple choisi avec une capacité égale à celle du premier condensateur C1 de manière à pouvoir obtenir une répartition identique des charges entre les deux condensateurs C1, C2.

L'émetteur sans-fil 8 représenté plus précisément sur la figure 1B comporte par exemple un quatrième interrupteur S4, un dispositif de contrôle/commande 81 associé à un microprocesseur 82 pour commander ce quatrième interrupteur S4, un convertisseur d'énergie 83 et un transmetteur 84. Après l'envoi du message, le dispositif de contrôle/commande 81 coupe l'alimentation de la partie aval par l'intermédiaire de l'interrupteur S4. Ainsi l'émetteur sans-fil 8 comporte les moyens permettant de gérer finement la consommation, donc l'énergie prélevée sur le condensateur C2. Cela permet d'assurer ainsi une autonomie au système avant de charger de nouveau le condensateur C2 par la procédure décrite précédemment.

Ce premier mode de réalisation est adapté pour un cycle de génération d'énergie exécuté par le générateur 1, c'est-à-dire pour la génération d'une alternance de tension positive ou négative. Avec le générateur 1 d'énergie décrit ci-dessus, ce cycle de génération d'énergie correspond à un passage de la partie mobile 5 de l'une de ses positions extrêmes à l'autre de ses positions extrêmes. Ce mouvement du générateur 1 est réalisé grâce à la came des moyens mécaniques d'entraînement. Comme représentée sur les figures 9 et 10A, la came prend alors la forme d'une simple rampe montante 62 ou descendante dessinée pour attribuer le mouvement de balancier à la partie mobile du générateur de sa première position extrême à sa deuxième position extrême. Sur la distance de coulissement du capot 61, la came qui se présente sous la forme de la rampe montante 62 ou descendante permet donc au générateur de réaliser un cycle de génération d'énergie électrique.

La figure 2 illustre le fonctionnement du dispositif d'accumulation d'énergie lors d'un mouvement du capot par exemple de sa position d'ouverture à sa position de fermeture en utilisant une simple rampe 62 montante. La première courbe (courbe a)) montre le profil de rampe suivi par les moyens mécaniques d'entraînement. Bien entendu, le même raisonnement peut être appliqué pour le mouvement inverse du capot. Sur cette figure 2 :
- A t0 le capot est dans sa position de fermeture (figure 8A). Aucun des interrupteurs S1, S2, S3 n'est actionné et ceux-ci sont tous en position d'ouverture. Les tensions aux bornes du premier condensateur C1 et du deuxième condensateur C2 sont nulles.
- Entre t0 et t1 le capot a débuté son coulissement vers sa position d'ouverture (figure 8B), entraînant le premier interrupteur S1 à la fermeture (courbe b)).
- A t1, le premier interrupteur S1 est fermé et le premier condensateur C1 est alors chargé par le générateur à une tension Uch (courbe e)).
- A t2, le capot arrive en bout de course, c'est-à-dire dans sa position d'ouverture (figure 8C). Le premier interrupteur S1 est alors désactivé pour empêcher le premier condensateur C1 de se décharger dans la résistance de la bobine 2 par le courant inverse de la diode (courbe b)). Dans le même temps, le deuxième interrupteur S2 se ferme (courbe c)), permettant ainsi de répartir les niveaux de charge entre les deux condensateurs C1, C2. La tension aux bornes du premier condensateur C1 et la tension aux bornes du deuxième condensateur C2 sont alors égales chacune à Uch/2 (courbe e) et f)).
- A t3, le troisième interrupteur S3 est activé (courbe d)), entraînant une décharge au moins partielle des deux condensateurs C1, C2 pour alimenter l'émetteur 8 sans-fil en vue de l'envoi d'un message vers le récepteur 9.

Lorsque le capot est en position d'ouverture ou en position de fermeture le premier interrupteur S1 reste ouvert ce qui permet de garantir la sauvegarde de l'énergie dans les condensateurs C1, C2.

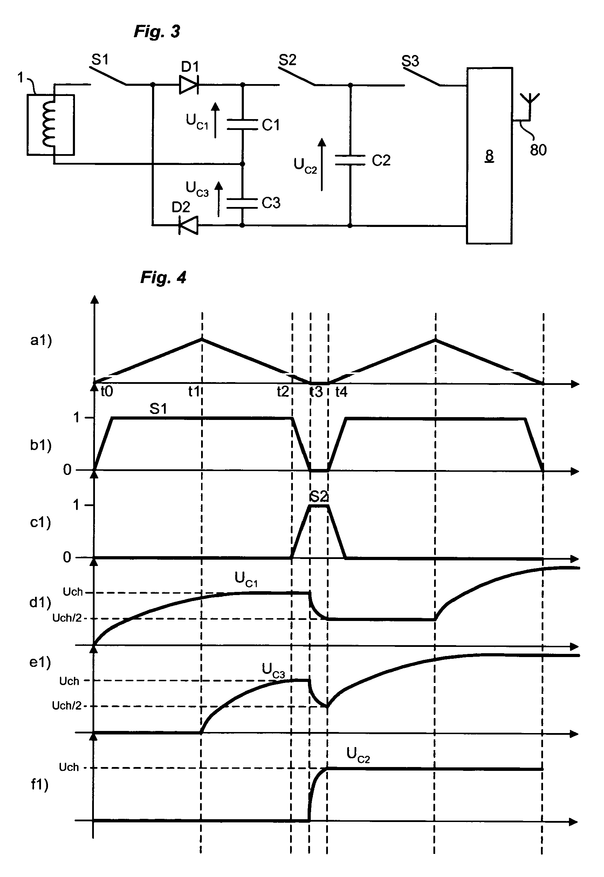

En adoptant un profil de came différent sur la distance de coulissement du capot 61, par exemple composé d'une rampe montante 620 suivie d'une rampe descendante 621 (figure 10B), il est possible de faire réaliser au générateur 1 d'énergie plusieurs cycles de génération d'énergie lors d'une seule activation de l'organe de commande, c'est-à-dire lors d'un seul coulissement du capot 61 de l'une de ses positions à l'autre de ses positions. Dans cette configuration le générateur 1 peut ainsi fournir à la fois une alternance de tension positive et une alternance de tension négative. Avec cette configuration mécanique, le dispositif d'accumulation d'énergie doit être adapté comme le montre la figure 3.

Sur la figure 3, un troisième condensateur C3 est positionné en série avec le premier condensateur C1. Le point milieu de connexion situé entre le premier condensateur C1 et le troisième condensateur C3 est alors connecté sur la deuxième borne de sortie du générateur 1. Par ailleurs, une deuxième diode D2 est connectée entre le point de connexion situé entre le premier interrupteur S1 et la première diode D1 et la deuxième borne de l'émetteur 8 sans-fil.

Alors que le premier condensateur C1 est destiné à se charger lors du premier cycle de génération d'énergie correspondant à une alternance positive ou négative et réalisé sur la première partie de la came, le troisième condensateur C3 est destiné à se charger lors du cycle de génération d'énergie suivant correspondant à une alternance respectivement négative ou positive et réalisé grâce à la deuxième partie de ia came.

Le principe de fonctionnement du dispositif d'accumulation d'énergie associé à la configuration mécanique composée de deux rampes successives (courbe a1)) est explicité sur la figure 4. Sur la figure 4 :
- A t0 le capot 61 est par exemple initialement dans sa position de fermeture (figure 8A). Aucun des interrupteurs S1, S2, S3 n'est activé et ceux-ci sont tous en position d'ouverture. Les tensions aux bornes du premier condensateur C1, du deuxième condensateur C2 et du troisième condensateur C3 sont nulles.
- Entre t0 et t1, le capot 61 a débuté son coulissement vers sa position d'ouverture (figure 8B), entraînant le premier interrupteur S1 à la fermeture (courbe b1)). Le premier condensateur C1 est alors chargé par le générateur 1 à une tension Uch (courbe d1)). Le deuxième interrupteur S2 reste ouvert.
- A t1, le capot est à mi-parcours. Le générateur 1 a alors déjà effectué un cycle de génération d'énergie grâce à la rampe montante 620.
- Entre t1 et t2, le capot poursuit son coulissement entraînant le générateur 1 pour un deuxième cycle de génération d'énergie. Ce deuxième cycle de génération d'énergie permet de charger le troisième condensateur C3 à la tension Uch (courbe e1)).
- A t3, le capot arrive en bout de course, c'est-à-dire dans sa position d'ouverture (figure 8C). Le premier interrupteur S1 est alors désactivé (courbe b1)) pour empêcher le premier condensateur C1 de se décharger dans la résistance de la bobine 2 par le courant inverse de la diode D1. Dans le même temps, le deuxième interrupteur S2 se ferme (courbe c1)), permettant ainsi de répartir les niveaux de charge entre les trois condensateurs C1, C2, C3. La tension aux bornes du premier condensateur C1 (courbe d1)) et du troisième condensateur C3 (courbe e1)) est ainsi à Uch/2 tandis que la tension aux bornes du deuxième condensateur C2 vaut alors Uch (courbe f1)).
- A partir de t4, un nouveau coulissement du capot en suivant la doublerampe permet alors de recharger les condensateurs tout en évitant leur saturation.

Selon l'invention, il est ainsi possible de prévoir N rampes successives sur la distance de coulissement du capot afin de pouvoir réaliser N cycles de génération d'énergie. Dans ce cas, le dispositif d'accumulation d'énergie doit comporter N condensateurs du type du premier ou du troisième condensateur pour récupérer l'énergie générée lors de chaque cycle de génération d'énergie. Le deuxième condensateur devra alors être dimensionné pour se charger à N*Uch/2 lors de la fermeture du deuxième interrupteur. La figure 5 montre par exemple une architecture du dispositif avec N=3.

Dans les différents modes de réalisation de l'invention, la séquence est légèrement différente lors du mouvement inverse du capot 61 lorsque celui-ci est déplacé de sa position d'ouverture vers la position de fermeture. En effet, contrairement à la séquence réalisée lors du mouvement de la position de fermeture à la position d'ouverture, cette séquence ne se termine pas par la fermeture du deuxième interrupteur S2 ce qui n'occasionne pas la décharge du premier condensateur C1 dans le deuxième condensateur C2.

Pour utiliser le dispositif de l'invention, un utilisateur ouvre le capot 61 du dispositif ce qui permet de générer une énergie électrique. Cette énergie électrique est stockée dans le dispositif d'accumulation 10 d'énergie en attendant d'être utilisée par l'émetteur 8 pour l'envoi d'un message. Ensuite, alors que le capot 61 est en position d'ouverture, l'utilisateur peut agir sur l'interface d'actionnement par exemple en appuyant sur un ou plusieurs boutons 7. Une action sur un bouton 7 permet ainsi de fermer le troisième interrupteur S3 permettant d'activer l'émetteur 8. L'énergie électrique stockée dans le dispositif d'accumulation 10 de l'énergie électrique est alors injectée dans l'émetteur 8 qui envoie un message vers le récepteur 9 par radiofréquence. Si après l'envoi d'un message, toute l'énergie générée et stockée n'a pas été consommée, une nouvelle pression sur un bouton peut être réalisée. Lorsque l'utilisateur a terminé, il referme le capot 61 sur la base 60 permettant de générer une nouvelle quantité d'énergie qui est stockée dans le dispositif d'accumulation d'énergie.

## Revendications

1. Dispositif de commande à distance comportant :
- un générateur (1) d'énergie destiné à convertir une énergie mécanique en énergie électrique,
- un dispositif d'accumulation (10) de l'énergie électrique connecté au générateur (1) d'énergie pour récupérer l'énergie électrique générée par le générateur et alimenter un émetteur (8) sans-fil pour envoyer un message à un récepteur (9) distant, le dispositif d'accumulation (10) de l'énergie électrique comportant :
- un premier condensateur (C1) connecté aux bornes du générateur (1) d'énergie et un premier interrupteur (S1) destiné à commander la charge/décharge du premier condensateur (C1),
- un deuxième condensateur (C2) connecté au premier condensateur (C1) et un deuxième interrupteur (S2) destiné à commander la charge/décharge du deuxième condensateur (C2),
le dispositif de commande à distance étant **caractérisé en ce qu'**il comporte des moyens de commande séquentielle agencés pour commander successivement le premier interrupteur (S1) et le deuxième interrupteur (S2), les moyens de commande séquentielle comportant un organe de commande mobile entre deux positions et coopérant successivement avec le premier interrupteur (S1) et le deuxième interrupteur (S2) lors d'un mouvement entre ses deux positions.

2. Dispositif de commande à distance selon la revendication 1, **caractérisé en ce qu'**il comporte un boîtier (6) comportant une base (60) renfermant le générateur (1) d'énergie et le dispositif d'accumulation (10) d'énergie, l'organe de commande étant agencé pour coulisser sur la base (60) du boîtier entre ses deux positions.

3. Dispositif de commande à distance selon la revendication 1 ou 2, **caractérisé en ce qu'**il comporte des moyens mécaniques d'entraînement agencés entre l'organe de commande et le générateur (1) d'énergie pour commander un cycle de génération d'énergie électrique au générateur (1) d'énergie lors du mouvement de l'organe de commande entre ses deux positions, ledit cycle de génération d'énergie électrique comportant une alternance de tension positive ou négative destinée à charger le premier condensateur (C1).

4. Dispositif de commande à distance selon l'une des revendications 1 à 3, **caractérisé en ce qu'**il comporte des moyens mécaniques d'entraînement agencés entre l'organe de commande et le générateur (1) d'énergie pour commander, lors du mouvement de l'organe de commande entre ses deux positions, un premier cycle de génération d'énergie électrique au générateur (1) d'énergie comportant une alternance de tension positive ou négative destinée à charger le premier condensateur (C1) et au moins un deuxième cycle de génération d'énergie suivant le premier cycle de génération d'énergie électrique, ledit deuxième cycle de génération d'énergie comportant une alternance de tension respectivement négative ou positive destinée à charger un autre condensateur (C3) distinct du premier condensateur (C1).

5. Dispositif de commande à distance selon la revendication 3 ou 4, **caractérisé en ce que** les moyens mécaniques d'entraînement agencés entre l'organe de commande et le générateur d'énergie comportent un mécanisme comportant une came (62, 620, 621) et un suiveur de came (64).

6. Dispositif de commande à distance selon la revendication 5, **caractérisé en ce que** la came comporte au moins une rampe montante (620) et une rampe descendante (621), chaque rampe commandant un cycle de génération d'énergie.

7. Dispositif de commande à distance selon l'une des revendications 3 à 6, **caractérisé en ce que** le générateur (1) d'énergie comporte une partie mobile (5) actionnable entre un premier état et un deuxième état pour générer une énergie électrique lors d'un cycle de génération d'énergie.

8. Dispositif de commande à distance selon la revendication 7, **caractérisé en ce que** le générateur (1) d'énergie est de type à induction électromagnétique et **en ce que** la partie mobile (5) est actionnable en mouvement par rapport à une bobine d'excitation (2).

9. Dispositif de commande à distance selon l'une des revendications 1 à 8, **caractérisé en ce que** le premier interrupteur (S1) et le deuxième interrupteur (S2) sont montés en série avec une borne de sortie du générateur (1) d'énergie.

10. Dispositif de commande à distance selon la revendication 2, **caractérisé en ce qu'**il comporte une interface d'actionnement connectée en série avec le premier interrupteur (S1) et le deuxième interrupteur (S2) et destinée à commander l'émetteur (8) sans-fil.

11. Dispositif de commande à distance selon la revendication 10, **caractérisé en ce que** l'interface d'actionnement est montée sur le boîtier et peut être masquée par l'organe de commande dans une première position ou démasquée lorsque l'organe de commande est dans une deuxième position.

12. Dispositif de commande à distance selon la revendication 10 ou 11, **caractérisé en ce que** l'interface d'actionnement comporte un ou plusieurs boutons (7).

13. Dispositif de commande à distance selon l'une des revendications 1 à 12, **caractérisé en ce que** l'émetteur (8) est à radiofréquence.

14. Dispositif selon l'une des revendications 1 à 13, **caractérisé en ce que** le récepteur (9) est associé à une lampe (91).

## Patentansprüche

1. Fernbetätigungsvorrichtung, umfassend:
- einen Energiegenerator (1), der dazu bestimmt ist, eine mechanische Energie in elektrische Energie umzuwandeln,
- eine elektrische Energieakkumulationsvorrichtung (10), die mit dem Energiegenerator (1) verbunden ist, um die von dem Generator generierte elektrische Energie zu sammeln und einen drahtlosen Sender (8) zu versorgen, um eine Nachricht an einen entfernten Empfänger (9) zu senden, wobei die elektrische Energieakkumulationsvorrichtung (10) Folgendes umfasst:
- einen ersten Kondensator (C1), der mit den Klemmen des Energiegenerators (1) verbunden ist, und einen ersten Schalter (S1), der dazu bestimmt ist, die Ladung/Entladung des ersten Kondensators (C1) zu steuern,
- einen zweiten Kondensator (C2), der mit dem ersten Kondensator (C1) verbunden ist, und einen zweiten Schalter (S2), der dazu bestimmt ist, die Ladung/Entladung des zweiten Kondensators (C2) zu steuern,
wobei die Fernbetätigungsvorrichtung **dadurch gekennzeichnet ist, dass** diese sequentielle Steuerungsmittel umfasst, die eingerichtet sind, aufeinanderfolgend den ersten Schalter (S1) und den zweiten Schalter (S2) zu steuern, wobei die sequentiellen Steuerungsmittel ein Steuerungsglied umfassen, das zwischen zwei Positionen bewegbar ist und aufeinanderfolgend mit dem ersten Schalter (S1) und dem zweiten Schalter (S2) bei einer Bewegung zwischen seinen beiden Positionen zusammenwirkt.

2. Fernbetätigungsvorrichtung nach Anspruch 1, **dadurch gekennzeichnet, dass** sie ein Gehäuse (6) umfasst, umfassend eine Basis (60), die den Energiegenerator (1) und die Energieakkumulationsvorrichtung (10) umfasst, wobei das Steuerungsglied eingerichtet ist, auf der Basis (60) des Gehäuses zwischen seinen beiden Positionen zu gleiten.

3. Fernbetätigungsvorrichtung nach Anspruch 1 oder 2, **dadurch gekennzeichnet, dass** sie mechanische Antriebsmittel umfasst, die zwischen dem Steuerungsglied und dem Energiegenerator (1) eingerichtet sind, um einen elektrischen Energiegenerierungszyklus des Energiegenerators (1) bei der Bewegung des Steuerungsglieds zwischen seinen beiden Positionen zu steuern, wobei der elektrische Energiegenerierungszyklus einen positiven oder negativen Spannungswechsel umfasst, der dazu bestimmt ist, den ersten Kondensator (C1) zu laden.

4. Fernbetätigungsvorrichtung nach einem der Ansprüche 1 bis 3, **dadurch gekennzeichnet, dass** diese mechanische Antriebsmittel umfasst, die zwischen dem Steuerungsglied und dem Energiegenerator (1) eingerichtet sind, um, bei der Bewegung des Steuerungsglieds zwischen seinen beiden Positionen, einen ersten elektrischen Energiegenerierungszyklus des Energiegenerators (1) zu steuern, welcher einen positiven oder negativen Spannungswechsel umfasst, der dazu bestimmt ist, den ersten Kondensator (C1) zu laden, und mindestens einen zweiten Energiegenerierungszyklus, der dem ersten elektrischen Energiegenerierungszyklus folgt, wobei der zweite Energiegenerierungszyklus einen jeweils negativen oder positiven Spannungswechsel umfasst, der dazu bestimmt ist, einen anderen Kondensator (C3) zu laden, der von dem ersten Kondensator (C1) verschieden ist.

5. Fernbetätigungsvorrichtung nach Anspruch 3 oder 4, **dadurch gekennzeichnet, dass** die mechanischen Antriebsmittel zwischen dem Steuerungsglied und dem Energiegenerator eingerichtet sind, umfassend einen Mechanismus, umfassend einen Nocken (62, 620, 621) und einen Nockenverfolger (64).

6. Fernbetätigungsvorrichtung nach Anspruch 5, **dadurch gekennzeichnet, dass** der Nocken mindestens eine aufsteigende Rampe (620) und eine absteigende Rampe (621) umfasst, wobei jede Rampe einen Energiegenerierungszyklus steuert.

7. Fernbetätigungsvorrichtung nach einem der Ansprüche 3 bis 6, **dadurch gekennzeichnet, dass** der Energiegenerator (1) einen beweglichen Teil (5) umfasst, der zwischen einem ersten Zustand und einem zweiten Zustand betätigbar ist, um eine elektrische Energie während eines Energiegenerierungszyklus zu generieren.

8. Fernbetätigungsvorrichtung nach Anspruch 7, **dadurch gekennzeichnet, dass** der Energiegenerator (1) vom elektromagnetischen Induktionstyp ist, und dass der bewegliche Teil (5) durch eine Bewegung in Bezug auf eine Anregungsspule (2) betätigbar ist.

9. Fernbetätigungsvorrichtung nach einem der Ansprüche 1 bis 8, **dadurch gekennzeichnet, dass** der erste Schalter (S1) und der zweite Schalter (S2) in Serie mit einer Ausgangsklemme des Energiegenerators (1) montiert sind.

10. Fernbetätigungsvorrichtung nach Anspruch 2, **dadurch gekennzeichnet, dass** diese eine Betätigungsschnittstelle umfasst, die in Serie mit dem ersten Schalter (S1) und dem zweiten Schalter (S2) verbunden und dazu bestimmt ist, den drahtlosen Sender (8) zu steuern.

11. Fernbetätigungsvorrichtung nach Anspruch 10, **dadurch gekennzeichnet, dass** die Betätigungsschnittstelle an dem Gehäuse montiert ist und durch das Steuerungsglied in einer ersten Position verdeckt oder aufgedeckt werden kann, wenn das Steuerungsglied in einer zweiten Position ist.

12. Fernbetätigungsvorrichtung nach Anspruch 10 oder 11, **dadurch gekennzeichnet, dass** die Betätigungsschnittstelle einen oder mehrere Knöpfe (7) umfasst.

13. Fernbetätigungsvorrichtung nach einem der Ansprüche 1 bis 12, **dadurch gekennzeichnet, dass** der Sender (8) ein Funksender ist.

14. Fernbetätigungsvorrichtung nach einem der Ansprüche 1 bis 13, **dadurch gekennzeichnet, dass** der Empfänger (9) mit einer Lampe (91) assoziiert ist.

## Claims

1. Remote control device comprising:
- a power generator (1) designed to convert mechanical power to electric power,
- a device (10) for accumulating the electric power, the said device being connected to the power generator (1) in order to collect the electric power generated by the generator and feed a wireless transmitter (8) in order to send a message to a remote receiver (9), the device (10) for accumulating the electric power comprising :
- a first capacitor (C1) connected to the terminals of the power generator (1) and a first switch (S1) designed to control the charging/discharging of the first capacitor (C1),
- a second capacitor (C2) connected to the first capacitor (C1) and a second switch (S2) designed to control the charging/discharging of the second capacitor (C2),
the remote control device being **characterized in that** it comprises sequential control means arranged to control successively the first switch (S1) and the second switch (S2), the sequential control means comprising a control member that can move between two positions and that cooperates successively with the first switch (S1) and the second switch (S2) when there is a movement between its two positions

2. Remote control device according to Claim 1, **characterized in that** it comprises a casing (6) comprising a base (60) containing the power generator (1) and the device (10) for accumulating power, the control member being arranged to slide on the base (60) of the casing between its two positions.

3. Remote control device according to Claim 1 or 2, **characterized in that** it comprises mechanical drive means arranged between the control member and the power generator (1) in order to control a cycle of electric power generation at the power generator (1) when the control member moves between its two positions, the said electric power generation cycle comprising an alternation of positive or negative voltage designed to charge the first capacitor (C1).

4. Remote control device according to one of Claims 1 to 3, **characterized in that** it comprises mechanical drive means arranged between the control member and the power generator (1) in order to control, when the control member moves between its two positions, a first cycle of electric power generation at the power generator (1) comprising an alternation of positive or negative voltage designed to charge the first capacitor (C1) and at least one second power generation cycle following the first electric power generation cycle, the said second power generation cycle comprising an alternation of respectively negative or positive voltage designed to charge another capacitor (C3) distinct from the first capacitor (C1).

5. Remote control device according to Claim 3 or 4, **characterized in that** the mechanical drive means arranged between the control member and the power generator comprise a mechanism including a cam (62, 620, 621) and a cam follower (64).

6. Remote control device according to Claim 5, **characterized in that** the cam comprises at least one ascending ramp (620) and one descending ramp (621), each ramp controlling a power generation cycle.

7. Remote control device according to one of Claims 3 to 6, **characterized in that** the power generator (1) comprises a movable portion (5) that can be actuated between a first state and a second state in order to generate electric power during a power generation cycle.

8. Remote control device according to Claim 7, **characterized in that** the power generator (1) is of the electromagnetic induction type and **in that** the movable portion (5) can be made to move relative to an excitation coil (2).

9. Remote control device according to one of Claims 1 to 8, **characterized in that** the first switch (S1) and the second switch (S2) are mounted in series with an output terminal of the power generator (1).

10. Remote control device according to Claim 2, **characterized in that** it comprises an actuation interface connected in series with the first switch (S1) and the second switch (S2) and designed to control the wireless transmitter (8).

11. Remote control device according to Claim 10, **characterized in that** the actuation interface is mounted on the casing and can be masked by the control member in a first position or unmasked when the control member is in a second position.

12. Remote control device according to Claim 10 or 11, **characterized in that** the actuation interface comprises one or more buttons (7).

13. Remote control device according to one of Claims 1 to 12, **characterized in that** the transmitter (8) is a radiofrequency transmitter.

14. Device according to one of Claims 1 to 13, **characterized in that** the receiver (9) is associated with a lamp (91).
